# EUROPEAN PATENT APPLICATION

(11) **EP 2 076 009 A1**
(43) Date of publication of application: **01.07.2009**
(21) Application number: 08173027.7
(22) Date of filing: 29.12.2008
(51) Int. Cl.: H04N 1/32

(54) **Recording of plural sets of development parameters in a RAW image data file**

(30) Priority: 26.12.2007 JP 2007334080
(71) Applicant: Nikon Corporation, Tokyo 100-8331 (JP)
(72) Inventor: Hoshuyama, Hideo, Tokyo 100-8331 (JP); Uwai, Hiroki, Tokyo 100-8331 (JP); Takemoto, Masami, Tokyo 100-8331 (JP); Shirahata, Takuya, Tokyo 100-8331 (JP)
(74) Representative: Walaski, Jan Filip

(57) **Abstract**

The camera creates an image file in which are stored parameters for image processing and image data in relation to each other, the image data recording device stores the image file, and the image processing device performs processing on RAW image data based on the parameters stored in the image file. A plurality of sets of profiles for use in creation of image data for display having different characteristics of colors from RAW image data (characteristic parameter sets) and a camera-specified profile/gain (characteristic specification information) to designate which profiles from among plurality of profiles in each of the plurality of characteristic parameter sets are to be used for creating image data for display are registered in a file header by an image file creation unit of the camera in relation to each other. The image file is stored in the image file recording device, for example, a memory card.

## Description

The disclosure of the following priority application is herein incorporated by reference: Japanese Patent Application No. 2007-334080 filed December 26, 2007.

The present invention relates to an image data recording device, to an image processing device, and to a camera.

A conventional image-capturing device records a developed image that has been created by performing image processing upon RAW image data, and the set of parameters used in image processing while creating the developed image, in an image file in mutual correspondence (for example, see Japanese Laid-Open Patent Publication 2007-74343).

Generally, with an image-capturing device, a plurality of options exist as parameters to be used in the various steps of performing image processing upon RAW image data, and only the same number of images for display can be created as the number of combinations of these options. However, with a conventional image-capturing device, only a single image processing parameter is recorded for each of the image processing step that are executed when creating an image for display from the RAW image data. As a result, when the user performs development processing upon the RAW image data with development software upon a personal computer in order to display an image of the RAW image data in the image file, he is only able to recreate an image of a single color characteristic. Accordingly, with this conventional device, it has not been possible to cater to the desire of a user who wishes to create an image that he likes, by adjusting the parameters for the various image processing steps individually.

With development software, the color reproducibility generally is different for each manufacturer, and there is also no compatibility in relation to the image processing parameters. Even in this situation, there are a large number of users who use development software made by a manufacturer different from the manufacturer of the camera that created the image file. Even if such a user has performed development using the image processing parameters in a conventional image file as described above, this does not necessarily result in his obtaining an image of the desired color characteristics. In this type of case, in order to adjust the color minutely, the user has been obliged to perform the development of the RAW image data over again from the beginning. In other words, the user has been obliged to select the image processing parameters for each image processing step of the development processing by a process of trial and error.

According to a first aspect, the present invention provides an image data recording device, including: a parameter set storage section in which are recorded a plurality of characteristic parameter sets, each including a plurality of characteristic parameters used for creating, from RAW image data, image data for display of a different characteristic color; a characteristic specification information creation unit that creates characteristic specification information for designating which characteristic parameter in the plurality of characteristic parameter sets is to be used for creating the image data for display; and a recording unit that records the RAW image data, the plurality of characteristic parameter sets, and the characteristic specification information related to each other upon a storage medium. The plurality of characteristic parameter sets includes a first stage characteristic parameter set including characteristic parameters to be used for performing a first stage of image processing that is to be performed upon the RAW image data, and a second stage characteristic parameter set including characteristic parameters to be used for performing a second stage of image processing that is to be performed after the image processing of the first stage.

According to a second aspect, the present invention provides an image processing device including: a read out unit that reads out data from a storage medium having stored the data therein, the stored data including RAW image data, a plurality of characteristic parameter sets including a first stage characteristic parameter set containing characteristic parameters to be used for performing a first stage of data conversion processing to be performed upon the RAW image data, and a second stage characteristic parameter set containing characteristic parameters to be used for performing a second stage of data conversion processing to be performed after the fist stage of data conversion processing, in order to create image data for display of colors having different characteristics on the basis of the RAW image data, and characteristic specification information for designating which of the characteristic parameters contained in each of the plurality of characteristic parameter sets is to be used for creating the image data for display; a characteristic designation information determination unit that determines, on the basis of the characteristic specification information read out by the read out unit, which of the characteristic parameters contained in each of the plurality of sets of characteristic parameters has been designated; an image processing unit that performs image processing on the RAW image data using the characteristic parameter determined by the characteristic specification information determination unit to create the image data for display; and a display unit that displays an image corresponding to the image data for display created by the image processing unit. The image processing unit performs the second stage of image processing after performing the first stage of image processing upon the RAW image data to create the image data for display.

According to a third aspect, the image processing device in the image processing device according to the second aspect may further include: a characteristic parameter designation unit that, on the basis of an instruction from the user, designates either of the characteristic parameters included in the plurality of sets of characteristic parameters. When the characteristic parameter designation unit has designated a characteristic parameter, the image processing unit creates the image data for display by performing image processing upon the RAW image data using the characteristic parameter designated by the characteristic parameter designation unit.

According to a fourth aspect, the image processing device according to the third aspect may further include: a characteristic specification information updating unit that takes the characteristic parameter designated by the characteristic parameter designation unit as the characteristic specification information, and updates the characteristic specification information recorded upon the storage medium.

According to a fifth aspect, the image processing device according to the third aspect may further include: a recording unit that records the characteristic parameter designated by the characteristic parameter designation unit upon the storage medium.

According to the sixth aspect, the present invention provides a camera, including: an image-capturing unit that captures and acquires an image of a photographic subject; a parameter set storage section in which is recorded a plurality of characteristic parameter sets each including a plurality of characteristic parameters to be used for creating, from RAW image data acquired by the image-capturing unit, image data for display of different colors corresponding to the characteristics of the image-capturing unit; a characteristic specification information creation unit that creates characteristic specification information for designating which characteristic parameter in the plurality of characteristic parameter sets is to be used for creating the image data for display; and a recording unit that records the RAW image data, the plurality of characteristic parameter sets, and the characteristic specification information upon a storage medium in relation to each other. The plurality of characteristic parameter sets includes a first stage characteristic parameter sets, which contains characteristic parameters to be used for performing a first stage of image processing that is to be performed upon the RAW image data, and a second stage set characteristic parameter set, which contains characteristic parameters to be used for performing a second stage of image processing that is to be performed after the image processing of the first stage.

According to a seventh aspect, the camera according to the sixth aspect may further include: an image processing unit that creates processed image data by performing image processing upon the RAW image data using the characteristic parameter designated by the characteristic specification information. The recording unit records the processed image data together with the RAW image data upon the storage medium.

With the image processing device according to the first aspect of the present invention, data can be provided, which data enables the user to cause a display device that displays a display image on the basis of RAW image to display an image by performing color adjustment similar to that performed in the device of the present invention.

Furthermore, with the image processing device according to the second aspect of the present invention, it is possible for the user to display an image by performing similar color adjustment to that performed by the device that created the RAW data image file.

With the camera according to the sixth aspect of the present invention, data can be provided, which data enables the user to cause a display device that displays a display image on the basis of RAW image to display an image by performing color adjustment similar to that performed in the device of the present invention.
FIG. 1 is a block diagram showing the construction of an image processing system in which a computer program product according to an embodiment of the present invention is implemented;
FIG. 2 is a schematic diagram showing the flow of development processing for RAW image data;
FIG. 3 is a diagram showing the format of a file header of a RAW data file;
FIGS. 4A through 4D are diagrams showing concrete examples of image processing parameters stored in the file header;
FIG. 5 is a flowchart illustrating photographic processing by a camera 100;
FIG. 6 is a flowchart illustrating RAW data file creation processing;
FIG. 7 is a flowchart illustrating image display processing by a personal computer 200;
FIGS. 8A through 8G are diagrams showing concrete examples of screens for setting image processing parameters;
FIG. 9 is a flowchart illustrating image editing processing;
FIG. 10 is a flowchart illustrating image processing parameter recording processing;
FIG. 11 is a figure showing a modification of the format for the file headers of the image files; and
FIG. 12 is a diagram illustrating ways in which an image processing program may be supplied from a storage medium, and from the internet or the like via a data signal.

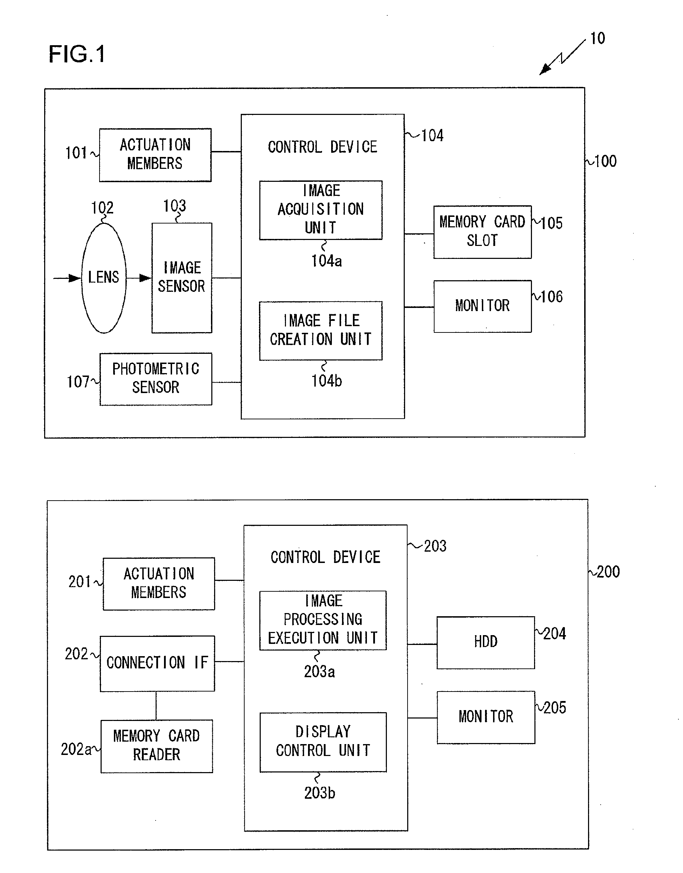

FIG. 1 is a block diagram showing the construction of an example of an image processing system to which the computer program product according to an embodiment of the present invention is implemented. An image processing system 10 includes a camera 100 and a personal computer 200.

The camera 100 includes actuation members 101, a lens 102, an image sensor 103, a control device 104, a memory card slot 105, a monitor 106, and a photometric sensor 107. The actuation members 101 include various input members that are actuated by the user, for example a power supply button, a zoom button, a 4-way directional key or button, a confirmation button, a replay button, a delete button, and the like.

Although the lens 102 is made up of a plurality of optical lens groups, only one lens is shown in FIG. 1 as a representative. The image sensor 103, which may be, for example, a CCD or a CMOS, captures an image of the photographic subject that has been formed by the lens 102. The image sensor 103 outputs RAW image data that has been obtained by this image capture process to the control device 104. The control device 104 creates an image file in a predetermined format on the basis of the RAW image data that has been input from the image sensor 103, and outputs the image file to the memory card slot 105. The processing performed by the control device 104 for creation of an image file will be described hereinafter.

The memory card slot 105 is a slot for inserting therein a memory card, which is a non-volatile storage medium. An image file that has been output from the control device 104 is read into the memory card and recorded therein. Moreover, on the basis of a command from the control device 104, the memory card slot 105 reads in an image file that is stored in a memory card.

The monitor 106 is a liquid crystal monitor that is mounted upon the rear surface of the camera 100 (i.e. a rear surface monitor). Upon the monitor 106, images that are stored upon the memory card and setting menus for setting the camera 100 and so on may be displayed. Moreover, the control device 104 continually acquires images from the image sensor 103 and outputs them on the monitor 106. This causes a through image to be displayed upon the monitor 106. The photometric sensor 107 divides the photographic scene into a plurality of regions, and outputs to the control device 104 a photometric signal according to the luminance of each of these regions.

The control device 104 includes a CPU and a memory and other peripheral circuitry, and functionally includes a unit that acquires an image (hereafter, image acquisition unit) 104a and a unit that creates an image file (hereafter, image file creation unit) 104b. It should be understood that some SDRAM or a flash memory is included in the memory that is provided to the control device 104. SDRAM is a volatile-type memory, and is used as a working memory for unfolding programs while they are being executed by the CPU, and as a buffer memory for temporarily recording data. Moreover, flash memory is a non-volatile-type memory, and is used for recording programs to be executed by the control device 104, and various types of parameters and so on that are read in during program execution.

The image acquisition unit 104a acquires RAW image data from the image sensor 103, on the basis of actuation of a release button that is included in the actuation members 101. The image file creation unit 104b creates an image file on the basis of this RAW image data that has been acquired by the image acquisition unit 104a. In the present embodiment, on the basis of a setting made by the user, the image file creation unit 104b creates at least one of a RAW data file in which RAW image data is included as actual image data, and a JPEG file in which a JPEG image data is included as actual image data.

In other words, the image file creation unit 104b creates a RAW data file when creation of a RAW data file is set by the user. Moreover, the image file creation unit 104b creates a JPEG file when creation of a JPEG file is set by the user. The image file creation unit 104b creates both a RAW data file and a JPEG file, when creation of both a RAW data file and a JPEG file is set by the user.

In the present embodiment, when creating a RAW data file, the image file creation unit 104b creates an image file in which are stored RAW image data that constitutes the actual image data, and information related to image processing parameters to be used in development processing for creating image data for display from the RAW image data. This information related to image processing parameters is stored in a file header of the image file. An application for performing development processing upon the RAW image data (i.e. a development application) reads out the data in the file header and performs development processing upon the RAW image data, thereby creating image data for display.

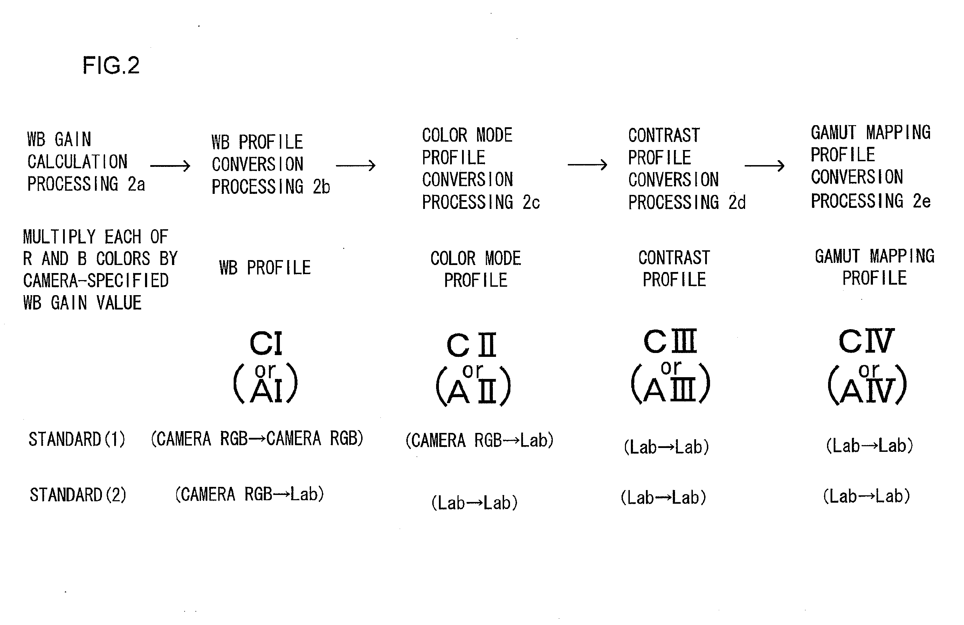

FIG. 2 is a schematic diagram showing the flow of development processing in the present embodiment. Note that development processing is performed by a development application that is executed upon an image processing device that has read in the image file, for example upon the personal computer 200. Alternatively, it would also be acceptable to arrange for this development processing to be executed by the control device 104 of the camera 100. Here, it is assumed that a control device 203 that will be described hereinafter of the personal computer 200 executes the development processing shown in FIG. 2, using the image processing parameters that have been designated by the camera 100.

First, the control unit 203 performs color interpolation processing not shown in the figures. Next, the control unit 203 performs processing for calculating a white balance gain (hereafter, WB gain calculation processing) 2a, and multiplies the R component and the B component, among the color components R, G, and B that make up the RAW image data, by a camera-specified WB gain. Then the control device 203 performs processing for converting white balance profile (i.e., WB profile conversion processing) 2b by applying a camera-specified WB profile CI to the image data. Then, after having performed processing for converting color mode profile (i.e., color mode profile conversion processing) 2c by applying a camera-specified color mode profile CII to the image data, the control device 203 performs processing for converting contrast profile (i.e., contrast profile conversion processing) 2d by applying a camera-specified contrast profile CI II to the image data. Then, the control unit 203 performs processing for converting gamut mapping profile (i.e., gamut mapping profile conversion processing) 2e by applying a camera-specified gamut mapping profile CIV to the image data.

Furthermore, the control device 203 is capable of performing the development processing shown in FIG. 2 using the image processing parameters that have been set by the development application. In this case, the control unit 203 performs color interpolation processing not shown in the figures. Next, the control unit 203 performs WB (white balance) gain calculation processing 2a, and multiplies the R component and the B component, among the color components R, G, and B that make up the RAW image data, by an application-specified WB gain. Then the control device 203 performs WB profile conversion processing 2b by applying an application-specified WB profile AI to the image data. Further, after having performed color mode profile conversion processing 2c by applying an application-specified colormode profile AII to the image data, the control device 203 performs contrast profile conversion processing 2d by applying an application-specified contrast profile AIII to the image data. Then the control unit 203 performs gamut mapping profile conversion 2e by applying an application-specified gamut mapping profile AIV to the image data.

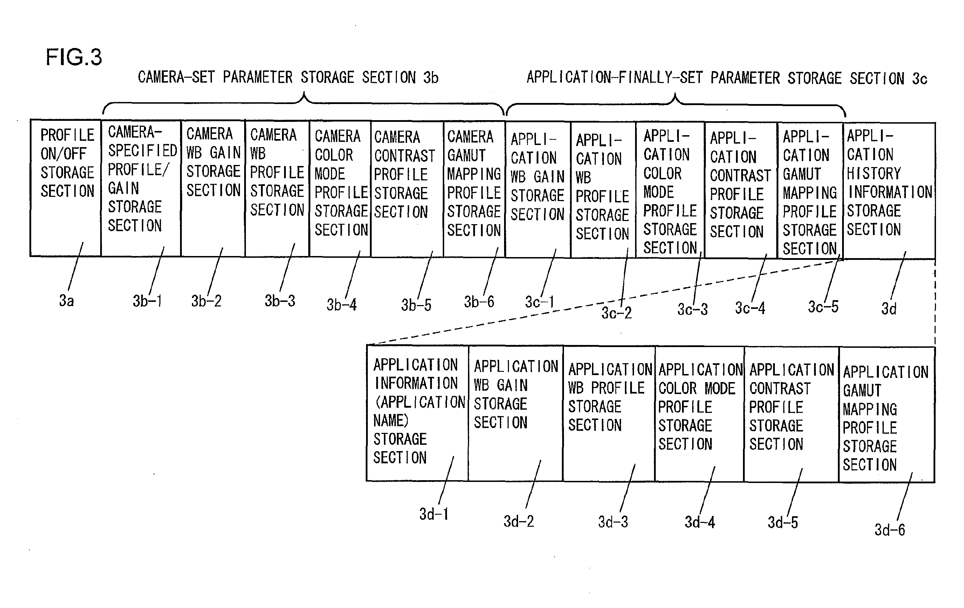

Note that the control device 203 uses those profiles recorded in the file header of the image file as the profiles to be used in the various profile conversion processing steps described above as will be described hereinafter with reference to FIG. 3. Furthermore, instead of this, the control device 203 uses a profile that is individually maintained by the development application if a command to do so has already been received from the user.

FIG. 3 is a schematic diagram showing the format of a file header of a RAW data file, in the present embodiment. In the file header, there are provided a section for storing profile ON/OFF (hereafter, profile ON/OFF storage section) 3a, a section for storing parameters set by the camera (hereafter, camera-set parameter storage section) 3b, a section for storing parameter finally set by application (hereafter, application-finally-set parameter storage section) 3c, and a section for storing information on history of application (hereafter, application history information storage section) 3d. Any one of the values 0, 1, and 2 may be set in the profile ON/OFF storage section 3a. If 0 is set in the profile ON/OFF storage section 3a, then the control device 203 is able to perform the development processing using image processing parameters that it retains uniquely, irrespective of the image processing parameters that are set in the file header.

By contrast, if 1 is set in the profile ON/OFF storage section 3a, then the control device 203 performs the development processing using the image processing parameters that are set in the camera-set parameter storage section 3b, on the basis of the specification information that is stored in a section for storing a gain in profile that is specified by camera (hereafter, camera-specified profile/gain storage section) 3b-1. Moreover, if 2 is set in the profile ON/OFF storage section 3a, then the control device 203 performs the development processing using the image processing parameters that are set in the application-finally-set parameter storage section 3c. In the present embodiment, the image file creation unit 104b sets 1 in the profile ON/OFF storage section 3a at the time point of creating the image file.

Image processing parameters that are used by processes that create image data for display from the RAW image data are stored in the camera-set parameter storage section 3b, in association with each of the processes. Furthermore, information for identifying image processing parameters that are determined on the basis of settings by the user upon the camera 100 or settings by the control device 104 is stored by the image file creation unit 104b in the camera-set parameter storage section 3b. In the camera-set parameter storage section 3b, there are included a section for storing a profile/gain specified by the camera (hereafter, camera-specified profile/gain storage section) 3b-1, a section for storing a gain in white balance set by the camera (hereafter, camera WB gain storage section) 3b-2, a section for storing a profile of white balance set by camera (hereafter, camera WB profile storage section) 3b-3, a section for storing a profile of color mode set by the camera (hereafter, camera color mode profile storage section) 3b-4, a section for storing a profile of contrast set by the camera (hereafter, camera contrast profile storage section) 3b-5, and a section for storing a profile of gamut mapping set by camera (hereafter, camera gamut mapping profile storage section) 3b-6.

Information for identifying a camera-specified WB gain, which is a WB gain specified by the camera, and information for identifying a camera-specified profile, which is a profile specified by the camera, are stored in the camera-specified profile/gain storage section 3b-1. The WB gain is determined by the image file creation unit 104b, and is information that indicates which WB gain, from among a plurality of WB gains stored in the camera WB gain storage section 3b-2 to be described hereinafter, should be employed when performing the development processing. The camera-specified profile is determined by the image file creation unit 104b, and is information that indicates which profile, from among a plurality of profiles stored in each of the camera WB profile storage section 3b-3, the camera color mode profile storage section 3b-4, the camera contrast profile storage section 3b-5, and the camera gamut mapping profile storage section 3b-6 to be described hereinafter, should be employed when performing the development processing.

The camera WB gain, that is a set of characteristic parameters of white balance gain (WB gain) that can be set by the camera, is stored in the camera WB gain storage section 3b-2. Moreover, the camera WB profile, that is a set of a plurality of white balance profiles that can be set by the camera, is set in the camera WB profile storage section 3b-3.

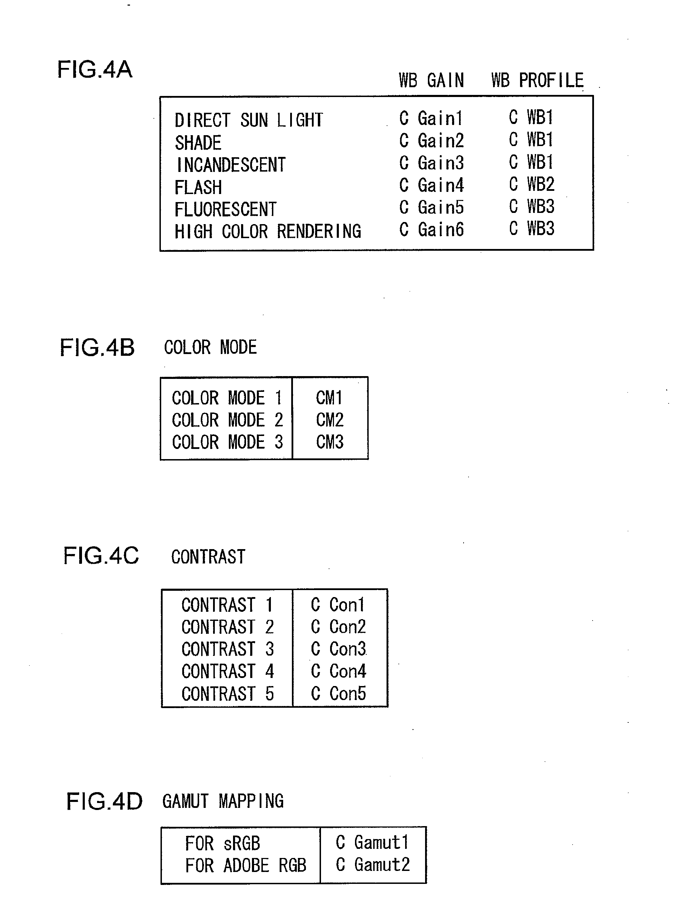

[0025] For example, with the camera 100 in the present embodiment, as shown in FIG. 4A, the user is able to set the white balance by designating, from a menu, any one of "direct sunlight", "shade", "incandescent", "flash", "fluorescent", or "high color rendering". In this case, six WB gains are stored in the camera WB gain storage section 3b-2: a WB gain CGain1 for when "direct sun light" has been designated by the user; a WB gain CGain2 for when "shade" has been designated by the user; a WB gain CGain3 for when "incandescent" has been designated by the user; a WB gain CGain4 for when "flash" has been designated by the user; a WB gain CGain5 for when "fluorescent" has been designated by the user; and a WB gain CGain6 for when "high color rendering" has been designated by the user.

Moreover, as shown in FIG. 4A, three WB profiles CWB are stored in the camera WB profile storage section 3b-3: a WB profile CWB1 that is set for when "direct sun light", "shade", or "incandescent" has been designated by the user; a WB profile CWB2 that is set for when "flash" has been designated; and a WB profile CWB3 that is set for when "fluorescent" or "high intensity" has been designated.

Each of the white balance profiles is an image processing parameter consisting of a table in which output values (Rout, Gout, and Bout) in the RGB color space are defined with respect to input values (Rin, Gin, Bin) in the RGB color space. Since 4096 tones of color for each of R, G, and B are available when 12-bit data is being used, accordingly 4096 cubed items of data are prepared for the table for CWB1. In a similar manner, 4096 cubed items of data are also prepared for the tables for CWB2 and CWB3 as well.

A set of color mode profiles that can be set by the camera 100 are stored as camera color mode profiles in the camera color mode profile storage section 3b-4. In concrete terms, as shown in FIG. 4B, three color mode profiles are stored in the camera color mode profile storage section 3b-4: a color mode profile CM1 that is set when "color mode 1" has been designated by the user; a color mode profile CM2 that is set when "colormode 2" has been designated; and a color mode profile CM3 that is set when "color mode 3" has been designated.

Each of these color mode profiles is an image processing parameter consisting of a table in which output values (Lout, aout, and bout) in the Lab color space are defined with respect to input values (Rin, Gin, Bin) in the RGB color space. Since 4096 tones of color for each of R, G, and B are available when 12-bit data is being used, 4096 cubed items of data are also prepared for the table for CM1. In a similar manner, 4096 cubed items of data are also prepared for the tables for CM2 and CM3 as well.

A set of contrast profiles that can be set by the camera 100 are stored as camera contrast profiles in the camera contrast profile storage section 3b-5. In concrete terms, as shown in FIG. 4C, five contrast profiles are stored in the camera contrast profile storage section 3b-5: a contrast profile CCon1 that is set when "contrast 1" has been designated by the user; a contrast profile CCon2 that is set when "contrast 2" has been designated by the user; a contrast profile CCon3 that is set when "contrast 3" has been designated by the user; a contrast profile CCon4 that is set when "contrast 4" has been designated by the user; and a contrast profile CCon5 that is set when "contrast 5" has been designated by the user.

Each of these contrast profiles is an image processing parameter consisting of a table in which output values (Lout, aout, and bout) in the Lab color space are defined with respect to input values (Lin, ain, bin) in the Lab color space.

A set of gamut mapping profiles that can be set by the camera 100 are stored as camera gamut mapping profiles in the camera gamut mapping profile storage section 3b-6. In concrete terms, as shown in FIG. 4D, two gamut mapping profiles are stored in the camera gamut mapping profile storage section 3b-6: a gamut mapping profile CGamut1 that is set when "for sRGB" has been designated as a color space setting by the user, and a gamut mapping profile CGamut2 that is set when "Adobe RGB" has been designated.

Each of these gamut mapping profiles is an image processing parameter consisting of a table in which output values (Lout, aout, and bout) in the Lab color space are defined with respect to input values (Lin, ain, bin) in the Lab color space. Note that it would also be acceptable to arrange to store these parameters, i.e. the camera WB gain, the camera WB profile, the camera color mode profile, the camera contrast profile, and the camera gamut mapping profile, in the application-finally-set parameter storage section 3c.

The image processing parameters that have finally been set by the development application after having read in the image file are stored by the development application in the application-finally-set parameter storage section 3c. The application WB gain storage section 3c-1, the application WB profile storage section 3c-2, the application color mode profile storage section 3c-3, the application contrast profile storage section 3c-4, and the application gamut mapping profile storage section 3c-5 are included in the application-finally-set parameter storage section 3c. The image processing parameters such as profiles and so on that were used when the development application finally performed development processing upon the RAW image data are stored in the application-finally-set parameter storage section 3c (in each of 3c-1 through 3c-5).

In other words, just as shown in FIGS. 4A through 4D, the development application also possesses a similar WB gain, WB profile, color mode profile, contrast profile, and gamut mapping profile as well. The format of each of these profiles is the same as shown in FIGS. 4A through 4D. The values of the parameters in these profiles are determined so as to implement the picture processing method unique to the development application. The user-designated WB gain for the development application is stored in the application WB gain storage section 3c-1 as an application WB gain. The user-designated WB profile of the development application is stored in the application WB profile storage section 3c-2 as an application WB profile. The user-designated color mode profile of the development application is stored in the application color mode profile storage section 3c-3 as an application color mode profile. The user-designated contrast profile of the development application is stored in the application contrast profile storage section 3c-4 as an application contrast profile. The user-designated gamut mapping profile of the development application is stored in the application gamut mapping profile storage section 3c-5 as an application gamut mapping profile.

The application information (application name) storage section 3d-1, the application WB gain storage section 3d-2, the application WB profile storage section 3d-3, the application color mode profile storage section 3d-4, the application contrast profile storage section 3d-5, and the application gamut mapping profile storage section 3d-6 are included in the application history storage section 3d.

The history of the profiles and so on that were stored in the application-finally-set parameter storage section 3c by the development application when performing development processing upon RAW image data in the past is stored in the application history information storage section 3d (in each of 3d-1 through 3d-6). In the present embodiment, application names are stored in the application information (application name) storage section 3d-1 for identifying the development applications that set the profiles and so on.

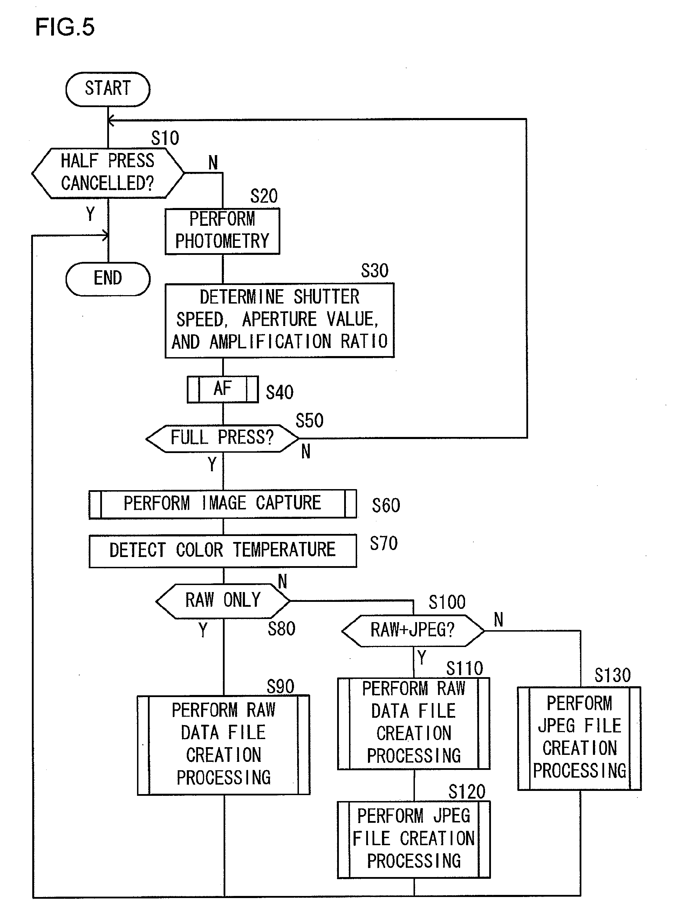

FIG. 5 is a flowchart showing the photographic processing by the camera 100, in the present embodiment. The processing shown in FIG. 5 is embodied as a program that is started when the release button included in the actuation members 101 is half pressed by the user, and that is then executed by the control device 104. The program whose flowchart is shown in FIG. 5 is recorded in the flash memory provided to the control device 104.

In a step S10, the image acquisition unit 104a decides whether or not half pressing of the release button by the user has been cancelled. If the result of this decision is affirmative, this processing terminates. By contrast, if the result of this decision is negative, then the flow of control proceeds to a step S20. In the step S20, the image acquisition unit 104a performs photometry on the basis of the output from the photometric sensor 107, and then the flow of control proceeds to a step S30. In the step S30, the image acquisition unit 104a determines upon a shutter speed, an aperture value, and an amplification ratio (i.e. an ISO speed) on the basis of the result of photometry, and then the flow of control proceeds to a step S40.

In the step S40 the image acquisition unit 104a performs auto focus (AF) processing, and then the flow of control proceeds to a step S50, where a decision is made as to whether or not the release button has been full pressed by the user. If the result of this decision is affirmative, then the flow of control returns to the step S10. By contrast, if the result of this decision is negative, then the flow of control proceeds to a step S60. In the step S60, the image acquisition unit 104a acquires the RAW image data that is input from the image sensor 103, and performs image capture processing. Then the flow of control proceeds to a step S70, in which the image acquisition unit 104a detects the color temperature of the RAW image data that has been acquired, and then the flow of control proceeds to a step S80.

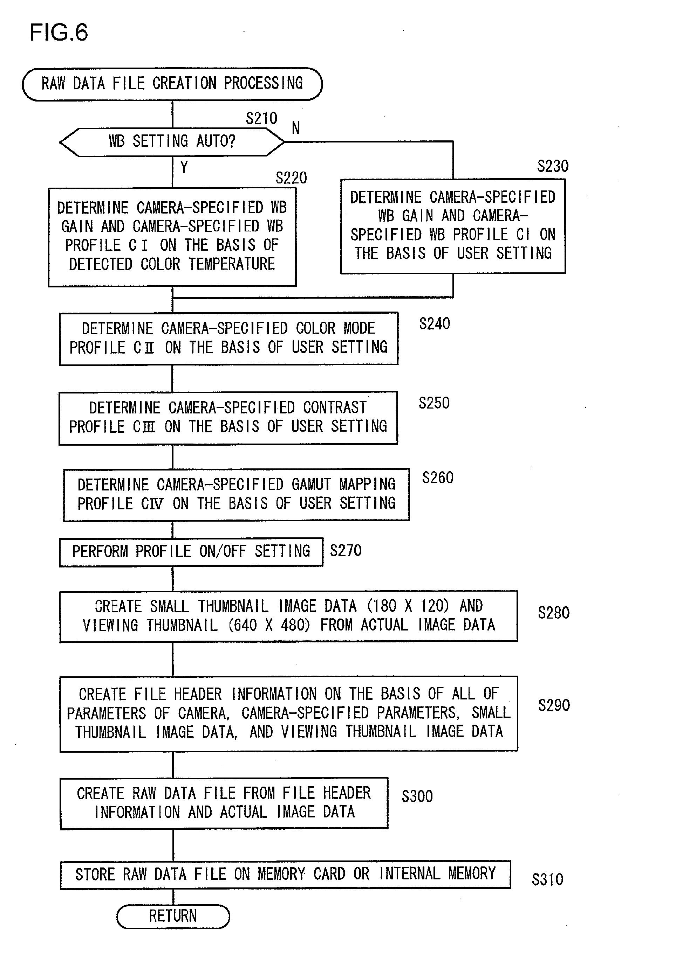

In the step S80, the image file creation unit 104b decides, on the basis of the details set by the user, whether or not the image file(s) to be created is only a RAW data file. If the result of this decision is affirmative then the flow of control proceeds to a step S90, and, after RAW data file creation processing to be described hereinafter with reference to FIG. 6 is executed and a RAW data file has been created, this processing terminates. By contrast, if the result of the decision in the step S80 is negative, the flow of control is transferred to a step S100, and the image file creation unit 104b decides, on the basis of the details set by the user, whether or not the image file (s) to be created are both a RAW data file and a JPEG file. If the result of this decision is affirmative, then the flow of control proceeds to a step S110.

In the step S110, in a similar manner to the step S90, after the image file creation unit 104b has executed RAW data file creation processing to be described hereinafter with reference to FIG. 6 and has created a RAW data file, the flow of control proceeds to a step S120. In the step S120, the image file creation unit 104b performs JPEG file creation processing and creates a JPEG file. In other words, the image file creation unit 104b determines the image processing parameters for implementing a picture processing method for the JPEG image data by performing the same decisions as in the step S210 through the step S260 of FIG. 6 to be described hereinafter, and processes the RAW image data using these image processing parameters. The image file creation unit 104b performs compression processing upon the processed image data and thereby creates JPEG image data, and creates a JPEG file in which this created JPEG image data is included as actual image data. Then this processing terminates.

Note that the same picture processing method is performed upon the RAW image data of the RAW data files that are created in the steps S90 and the steps S110, for image data for display that is created on the basis of specification information that isstoredinthecamera-specifiedprofile/gainstoragesection 3b-1, and for image data for display that is created from the JPEG file created in the steps S120 and S130. Due to this, images that are displayed on the basis of these types of image data have the same color and the same contrast.

On the other hand, if the result of the decision in the step S100 is negative, then the flow of control proceeds to a step S130. In the step S130, the image processing unit 104b executes JPEG file creation processing in a similar manner to the case in the step S120, and then this processing terminates.

FIG. 6 is a flowchart illustrating the RAW data file creation processing that is executed by the step S90 or the step S110 of FIG. 5. The program for the flowchart shown in FIG. 6 is also recorded in the flash memory provided to the control device 104.

In a step S210, the image file creation unit 104b decides whether or not the white balance setting is set to auto. If the result of this decision is affirmative then the flow of control proceeds to a step S220 in which the image file creation unit 104b determines a camera-specified WB gain and a camera-specified WB profile CI on the basis of the color temperature of the RAW image data that was detected in the step S70 in FIG. 5, and then the flow of control is transferred to a step S240. In other words, on the basis of the color temperature information in the RAW image data, the image file creation unit 104b selects anyone of the WB gains CGain1 through CGain6 as the camera-specified WB gain. Moreover, the image file creation unit 104b selects any one of the WB profiles CWB1 through CWB3 as the camera-specified WB profile on the basis of the color temperature information in the RAW image data.

By contrast, if the result of the decision in the step S210 is negative, then the flow of control is transferred to a step S230, in which the image file creation unit 104b determines upon a WB gain and a WB profile CI on the basis of the settings by the user, and then the flow of control proceeds to a step S240. These settings are made by the user actuating the actuation members 101 before photography. In other words, the image file creation unit 104b selects one of the six WB gains CGain1 through CGain 6 as the camera-specified WB gain on the basis of the setting by the user. Moreover, the image file creation unit 104b selects one of the three WB profiles CWB1 through CWB3 as the camera-specified WB profile CI on the basis of the setting by the user.

In the step S240, the image file creation unit 104b determines a color mode profile CII on the basis of the setting by the user, and then the flow of control proceeds to a step S250. In other words, the image file creation unit 104b selects one from among the three color mode profiles CM1 through CM3 as the camera-specified color mode profile CII, on the basis of the setting by the user. This setting is made by the user actuating the actuation members 101 before photography.

In the step S250, the image file creation unit 104b determines a camera-specified contrast profile CIII on the basis of the setting by the user, and then the flow of control proceeds to a step S260. In other words, the image file creation unit 104b selects one of the five contrast profiles CCon1 through CCon5 as the camera-specified contrast profile CIII on the basis of the setting by the user. This setting is made by the user actuating the actuation members 101 before photography.

In the step S260, the image file creation unit 104b determines a camera-specified gamut mapping profile CIV on the basis of the setting by the user, and then the flow of control proceeds to a step S270. In other words, the image file creation unit 104b selects one of the two gamut mapping profiles CGamut1 and CGamut2 as the camera-specified gamut mapping profile CIV on the basis of the setting by the user. This setting is made by the user actuating the actuation members 101 before photography.

In the step S270, the image file creation unit sets 1 in the profile ON/OFF storage section, as described above, and then the flow of control proceeds to a step S280. In the step S280, after having created image data for display by applying the camera-specified WB gain and the camera-specified profiles that were determined upon in the step S220 through the step S260 to the actual image data, in other words to the RAW image data, then the image file creation unit 104b creates, from the image data for display, two types of thumbnail image, i.e., small thumbnail image data whose image size is 180 (pixels) x 120 (pixels) and viewing thumbnail data whose image size is 640 (pixels) x 480 (pixels) ; and then the flow of control proceeds to a step S290.

In the step S290, the image file creation unit 104b generates a file header for the RAW data file. In concrete terms, the image file creation unit 104b stores the set value for profile ON/OFF that was set in the step S270 in the profile ON/OFF storage section 3a, and stores data that indicates the camera-specified WB gain and the camera-specified profiles that were determined by the processing of the step S220 through the step S260 in the camera-specified profile/gain storage section 3b-1. Furthermore, the image file creation unit 104b stores the set of the plurality of WB gains and the set of the plurality of profiles that can be set by the camera 100 in the various regions that correspond to the camera WB gain storage section 3b-2 through the camera gamut mapping profile storage section 3b-6 in the camera-set parameter storage section 3b. Also, the image file creation unit 104b stores the small thumbnail image data and the viewing thumbnail image data that were created in the step S280 in the file header. Then the flow of control proceeds to a step S300.

In the step S300, the image file creation unit 104b creates a RAW data file that includes the RAW image data that is the actual image data and the file header that was created in the step S290, and then the flow of control proceeds to a step S310. In the step S310, the image file creation unit 104b records the RAW data file it has created upon the memory card (anexternalmemory) that has been inserted into the memory card slot 105, or in the flash memory (an internal memory) that is provided to the control device 104. Then the flow of control is returned to the processing of FIG. 5.

Next, the personal computer 200 will be explained. As shown in FIG. 1, the personal computer 200 includes actuation members 201, a connection IF (interface) 202, a control device 203, a HDD (hard disk drive) 204, and a monitor 205.

The actuation members 201 include various devices that are actuated by the user, for example a keyboard and a mouse. The connection IF 202 is an interface for the connection of an external device, and here, for example, a USB interface may be used for connecting an external device via a USB cable. In the present embodiment, a memory card reader 202a is connected via a USB cable to the connection IF 202, for inputting and outputting data to and from a memory card such as an SD (secure digital) card or a CF (compact flash) card (registered trademark) or the like.

In the present embodiment insertion into the memory card 202a of a memory card upon which the image file has been recorded by the camera 100 enables the personal computer 200 to read in the image file.

The HDD 204 is a storage medium for recording image files that have been read in via the connection IF 202, and various programs and so on that are executed by the control device 203. The monitor 205, which may be, for example, a liquid crystal monitor, displays various types of data for display that are output from the control device 203.

The control device 203 includes a CPU, a memory, and other peripheral circuitry, and functionally includes an image processing execution unit 203a. Note that a SDRAM or a flash memory is included in the memory that is incorporated in the control device 203. SDRAM is a volatile type of memory, and is used as a work memory for unfolding programs during program execution by the CPU, and is also used as a buffer memory for temporarily recording data. A flash memory is a non-volatile type memory, and is used for recording various parameters and the like that are read in during program execution.

When, in the state in which a development application has been started, reading in of any RAW data file from among the RAW data files that are recorded upon the HDD 204 has been commanded by the user (i.e. when a file open command has been issued), the image processing execution unit 203a performs image processing, i.e., development processing upon the RAW image data that is stored in that RAW data file, using the image processing parameters that are recorded in the file header to create image data for display. The display control unit 203b displays image data for display that has been created by the image processing execution unit 203a, upon the monitor 205.

At this time, the image processing execution unit 203a refers to the value recorded in the profile ON/OFF storage section 3a within the file header of the image file, and determines the image processing parameters that are to be used in the development processing. In other words, as described above, the image processing execution unit 203a refers to the set value of the profile ON/OFF storage section 3a, and determines whether to perform the development processing using the image processing parameters that are set in the camera-set parameter storage section 3b (the set value is 1) ; or whether to perform the development processing using the image processing parameters that are set in the application-finally-set parameter storage section 3c (the set value is 2); or whether to perform the development processing using the image processing parameters that it retains by itself, irrespective of the image processing parameters that are set in the file header (the set value is 0).

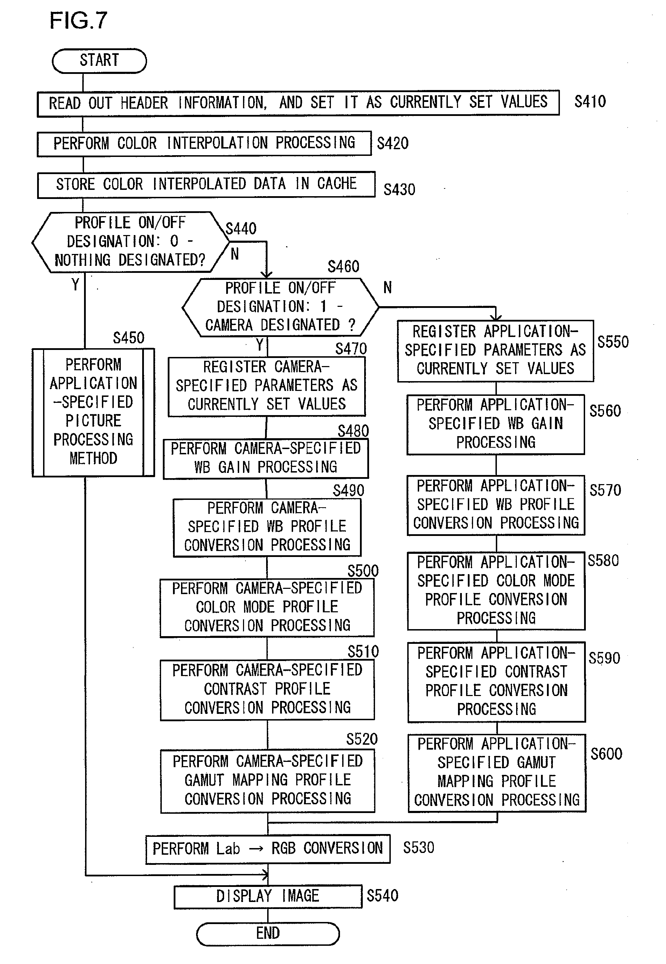

FIG. 7 is a flowchart illustrating the image display processing by the personal computer 200 in the present embodiment. The processing shown in FIG. 7 is executed by the control device 203 as instructed by a program that starts when, in the state in which a development application has started, a command is issued by the user to open any one of the RAW data files that are recorded upon the HDD 204. The program for the flowchart illustrated in FIG. 7 is recorded upon the HDD 204. Moreover, the program for the flowchart illustrated in FIG. 7 is installed upon the HDD 204 from a storage medium such as a CD-ROM or a DVD-ROM or the like.

In a step S410, the image processing execution unit 203a reads out the header information from the file header of the RAW data file and stores the header information that has been read out in the SDRAM as the currently set values, and then the flow of control proceeds to a step S420. In the step S420, the image processing execution unit 203a performs color interpolation processing upon the RAW image data, and then the flow of control proceeds to a step S430.

Although image signals related to red color are output from the pixels of the image sensor 103 that output the R component, there is no information related to green color and blue color. In a similar manner, no image signals for red color and blue color are output from the pixels of the image sensor 103 that output the G component. Moreover, no image signals for red color and green color are output from the pixels of the image sensor 103 that output the B component. As a result, for example, for the R component, image data for green color and for blue color is created by performing color interpolation processing on the basis of the values of surrounding pixels. By also performing color interpolation processing in a similar manner upon the pixels for the G component and upon the pixels for the B component, data for all the R, G, and B color components is obtained for all the pixels of one image. The data for this one image after this color interpolation processing will hereinafter be termed the "color interpolated data".

In the step S430, the image processing execution unit 203a records the color interpolated data that has been obtained by the color interpolation processing in the cache memory, that is, in the SDRAM that is provided to the control device 203, and then the flow of control proceeds to a step S440.

In the step S440, the image processing execution unit 203a makes a decision as to whether or not the value that is recorded in the profile ON/OFF storage section 3a is 0. If the result of this decision is affirmative, then the flow of control proceeds to a step S450, in which, using the image processing algorithm and the image processing parameters that are possessed by the development application, the image processing execution unit 203a creates image data for display by performing the development processing (i.e. by executing the picture processing method) that is unique to the development application. Then the flow of control is transferred to a step S540 that will be described hereinafter.

On the other hand, if the result of the decision in the step S440 is negative, then the flow of control is transferred to a step S460. In the step S460, a decision is made as to whether or not the value that is recorded in the profile ON/OFF storage section 3a is 1. If the result of this decision is affirmative, then the flow of control proceeds to a step S470, in which, on the basis of the set values in the camera-specified profile/gain storage section 3b-1 recorded in the file header of the RAW data file, the image processing execution unit 203a identifies the image processing parameters that were set by the camera (i.e. the camera-specified WB gain and the camera-specified profiles), and registers them as the currently set values. These currently set values are information that indicates the image processing parameters (i.e. the WB gain and the profiles) that were used by the image processing execution unit 203a for creating the image data for initial display. On the other hand, the newly set values are information that indicates the image processing parameters (i.e. the WB gain and the profiles) that have been changed according to the desires of the user with regard to the initially created image data for display. The currently set values and the newly set values are set and managed by the image processing execution unit 203a in individual separate regions of the SDRAM. The processing related to the newly set values will be described hereinafter.

Then the flow of control proceeds to a step S480, in which, on the basis of the currently set value that was registered in the step S470, the image processing execution unit 203a identifies that white balance gain, among the white balance gains recorded in the camera WB gain storage section 3b-2, that corresponds to the camera-specified WB gain. The image processing execution unit 203a performs WB gain calculation processing (the camera-specified WB gain calculation processing) upon the RAW image data (the RGB data) using the camera-specified WB gain. Then the flow of control proceeds to a step S490.

In the step S490, on the basis of the currently set value registered in the step S470, the image processing execution unit 203a identifies that white balance profile, among the white balance profiles recorded in the camera WB profile storage section 3b-3, that corresponds to the camera-specified WB profile CI. The image processing execution unit 203a performs WB profile conversion processing (the camera-specified WB conversion processing) 2b upon the image data (the RGB data) using this camera-specified WB profile CI. Then the flow of control proceeds to a step S500.

In the step S500, on the basis of the currently set value registered in the step S470, the image processing execution unit 203a identifies that color mode profile, among the color mode profiles recorded in the camera color mode profile storage section 3b-4, that corresponds to the camera-specified color mode profile CII. The image processing execution unit 203a performs color mode profile conversion processing (the camera-specified color mode conversion processing) 2c upon the image data in the RGB color system using the camera-specified color mode profile CII, thus converting it into image data in the Lab color system. Then the flow of control proceeds to a step S510.

In the step S510, on the basis of the currently set value registered in the step S470, the image processing execution unit 203a identifies that contrast profile, among the contrast profiles recorded in the camera contrast profile storage section 3b-5, that corresponds to the camera-specified contrast profile CIII. The image processing execution unit 203a performs contrast profile conversion processing (the camera-specified contrast conversion processing) 2d upon the image data (the Lab data) using this camera-specified contrast profile CIII. Then the flow of control proceeds to a step S520.

In the step S520, on the basis of the currently set value registered in the step S470, the image processing execution unit 203a identifies that gamut mapping profile, among the gamut mapping profiles recorded in the camera gamut mapping profile storage section 3b-6, that corresponds to the camera-specified gamut mapping profile CIV. The image processing execution unit 203a performs gamut mapping profile conversion processing (the camera-specified gamut mapping conversion processing) 2e upon the image data (the Lab data) using this camera-specified gamut mapping profile CIV. Then the flow of control proceeds to a step S530, in which the image processing execution unit 203a creates image data for display by converting the image data in the Lab color system to image data in the RGB color system, and then the flow of control proceeds to a step S540 that will be described hereinafter.

On the other hand, if a negative decision result is reached in the step S460, then the flow of control is transferred to a step S550. In the step S550, the image processing execution unit 203a identifies the various image processing parameters in the application-finally-set parameter storage section 3c recorded in the file header of the RAW data file, and registers them as the currently set values. Then the flow of control proceeds to a step S560.

In the step S560, on the basis of the currently set value registered in the step S550, the image processing execution unit 203a identifies the application-specified white balance gain recorded in the application WB gain storage section 3c-1. The image processing execution unit 203a performs WB gain calculation processing (the application-specified WB gain calculation processing) 2a upon the RAW image data (the RGB data) using this application-specified WB gain. Then the flow of control proceeds to a step S570.

In the step S570, on the basis of the currently set value registered in the step S550, the image processing execution unit 203a identifies the application-specified white balance profile AI that is recorded in the application WB profile storage section 3c-2. The image processing execution unit 203a performs WB profile conversion processing (the application-specified WB profile conversion processing) 2b upon the image data (the RGB data) using this application-specified WB profile AI. Then the flow of control proceeds to a step S580.

In the step S580, on the basis of the currently set value registered in the step S550, the image processing execution unit 203a identifies the application-specified color mode profile AII recorded in the application color mode profile storage section 3c-3. The image processing execution unit 203a performs color mode profile conversion processing (the application-specified color mode profile conversion processing) 2c upon the image data in the RGB color system using the application-specified color mode profile AII, thus converting it to image data in the Lab color system. Then the flow of control proceeds to a step S590.

In the step S590, on the basis of the currently set value registered in the step S550, the image processing execution unit 203a identifies the application-specified contrast profile AIII recorded in the application contrast profile storage section 3c-4. The image processing execution unit 203a performs contrast profile conversion processing (the application-specified contrast profile conversion processing) 2d upon the image data (the Lab data) using the application-specified contrast profile AIII. Then the flow of control proceeds to a step S600.

In the step S600, on the basis of the currently set value registered in the step S550, the image processing execution unit 203a identifies the application-specified gamut mapping profile AIV recorded in the application gamut mapping profile storage section 3c-5. The image processing execution unit 203a performs gamut mapping profile conversion processing (the application-specified gamut mapping profile conversion processing) 2e upon the image data (the Lab data) using this application-specified gamut mapping profile AIV. Then the flow of control is transferred to the step S530.

In the step S530, the image processing execution unit 203a creates image data for display by performing color space conversion of the image data in the Lab color system to image data in the RGB color system, and then the flow of control proceeds to the step S540. In the step S540, the display control unit 203b outputs the image data for display that has been created by the image processing execution unit 203a to the monitor 205 and displays it. Then this processing terminates.

In the present embodiment, the user is able to perform editing of the RAW image data by changing the image processing parameters upon an image processing parameter setting screen of the development application. The image processing execution unit 203a receives these changes of the image processing parameters by the user upon the image processing parameter setting screen, and performs image editing processing upon the RAW image data on the basis of these changed parameter values.

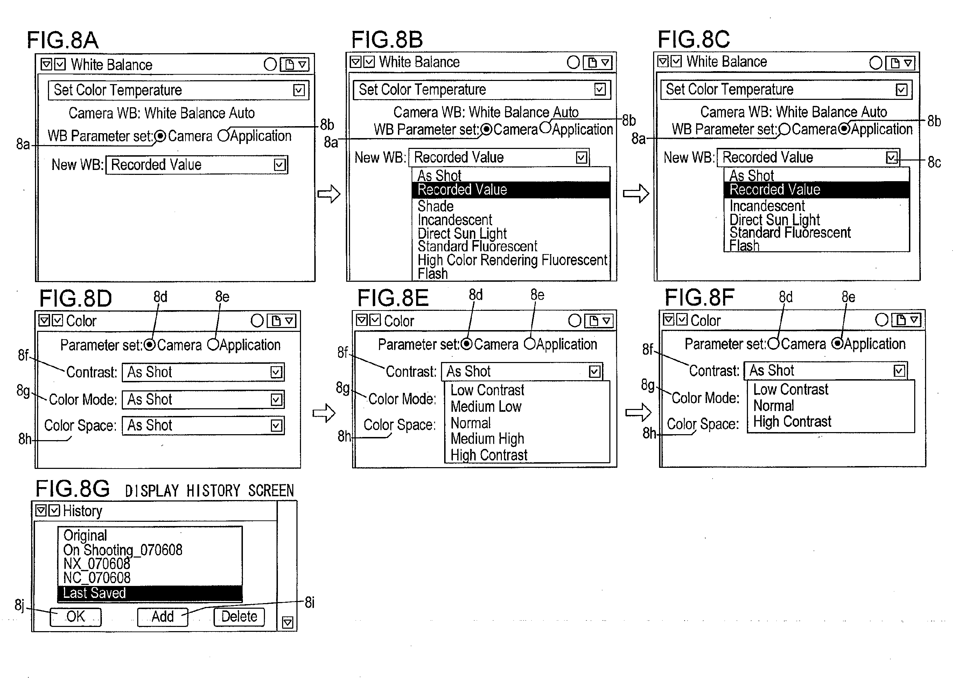

For example, the user may perform changes of the image processing parameters upon the image processing parameter setting screen like those shown in FIGS. 8A through 8G. FIGS. 8A through 8C are displays upon the parameter setting screen for the user to change the set values of the image processing parameters related to the white balance processing. By the user actuating the actuation members 201 and, after having selected "Camera" 8a as shown in FIG. 8A, selecting options in the "New WB" field 8c as shown in FIG. 8B, he is able to set any of the image processing parameters related to white balance that can be set by the camera 100, in any words any of the image processing parameters that are stored in the camera WB gain storage section 3b-2 and the camera WB profile storage section 3b-3, as the parameters when creating an image for display. It should be understood that, even if the user has changed the state of selection in the field "New WB" 8c, the information in the camera-specified profile/gain storage section 3b-1 that specifies the camera gain and the camera WB profile is not changed.

Note that, as shown in FIG. 8B, a list of titles appended to image processing parameters related to white balance that can be set by the user is displayed in the "New WB" field 8c. For example, by selecting "As Shot" from the list for "New WB" 8c shown in FIG. 8B, the user is able to read in the parameters related to white balance set upon the camera 100 during photography, and to designate these parameters for performing image processing. In other words, if "As Shot" has been selected by the user, then, on the basis of the information that is stored in the camera-specified profile/gain storage section 3b-1, the image processing execution unit 203a specifies a camera-specified WB gain and a camera-specified WB profile CI from among the profiles that are stored in the camera WB gain storage section 3b-2 and the camera WB profile storage section 3b-3, and performs white balance processing upon the image data on the basis of these.

Moreover, by the user selecting "Recorded Value" from the list for "New WB" 8c, it is possible to read in the parameters related to white balance that have finally been set by the development application, and to designate them for performing image processing. In other words, if "Recorded Value" has been selected by the user, then the image processing execution unit 203a identifies the application-specified white balance gain that is recorded in the application WB gain storage section 3c-1 and the application-specified white balance profile AI that is recorded in the application WB profile storage section 3c-2, and performs white balance processing upon the image data on the basis of these.

Note that, in the various figures FIG. 8D through FIG. 8F to be described hereinafter, the user is able to designate reading in of the camera-specified profiles by selecting "As Shot", and is able to designate reading in of the application-specified profiles by selecting "Recorded Value".

On the other hand, by actuating the actuation members 201 and, after having selected "Application" 8b as shown in FIG. 8C, selecting an option from the field "New WB" 8c, the user is able to select those image processing parameters that correspond to the option he has selected from the list of "New WB" 8c, from among the image processing parameters related to white balance possessed uniquely by the development application, as the parameters to be used during creation of the image for display. Upon actuation by the user, the control device 203 is able to store the parameters that have been selected in the application WB gain storage section 3c-1 and the application WB profile storage section 3c-2 as the application-specified WB gain and the application-specified WB profile AI.

FIGS. 8D through 8F are displays upon the parameter setting screen for the user to change the set values of the image processing parameters related to the contrast processing, the color mode processing, and the gamut mapping processing. By actuating the actuation members 201 and, after having selected "Camera" 8d as shown in FIG. 8D, selecting an option from the field "Contrast" 8f as shown in FIG. 8E, the user is able to set any one of the image processingparameters related to contrast that can be set by the camera 100, that is, any one of the parameters that are stored in the camera contrast profile storage section 3b-5, as the parameter to be used during creation of the image for display.

On the other hand, by actuating the actuation members 201 and, after having selected "Application" 8e as shown in FIG. 8F, selecting an option from the field "Contrast" 8f, the user is able to set the image processing parameters that he has selected, from among the image processing parameters related to contrast possessed uniquely by the development application, as the parameter to be used during creation of the image for display. Moreover, upon actuation by the user, the control device 203 is able to store the parameters that have been selected in the application WB contrast profile storage section 3c-4.

In a similar manner, by selecting an option from the field "Color Mode" 8g after having selected "Camera" 8d or "Application" 8e, the user is also able to set an image processing parameter related to color mode for use during creation of the image for display. Moreover, by selecting an option from the field "Color Space" 8h after having selected "Camera" 8d or "Application" 8e, the user is also able, in a similar manner, to set an image processing parameter related to gamut mapping for use during creation of the image for display.

FIG. 8G shows a history display screen for displaying a history list corresponding to the information that is recorded in the application history information storage section 3d. A name is attached to each item of history information, and the names of the various items of history information are displayed upon this history screen. By the user actuating the actuation members 201 and pressing the "Add" button 8i, he is able to attach a history name to the current parameters that are being applied as image processing parameters, so as to create an item of history information, and to instruct this item of history information to be stored in the application history information storage section 3d. Moreover, by actuating the actuation members 201 upon this history display screen and selecting any one of the items of history information, and by pressing the "OK" button 8j, the user is able to read out the image processing parameters that are being maintained as this item of history information, and to instruct image data for display to be created.

Note that, in the present embodiment, apart from the various screens shown in FIGS. 8A through 8G, there is also provided a screen for changing the set value of the profile ON/OFF storage section 3a, so that, by actuation of the actuation members 201, the user is also enabled to change the set value of the profile ON/OFF storage section 3a upon this screen.

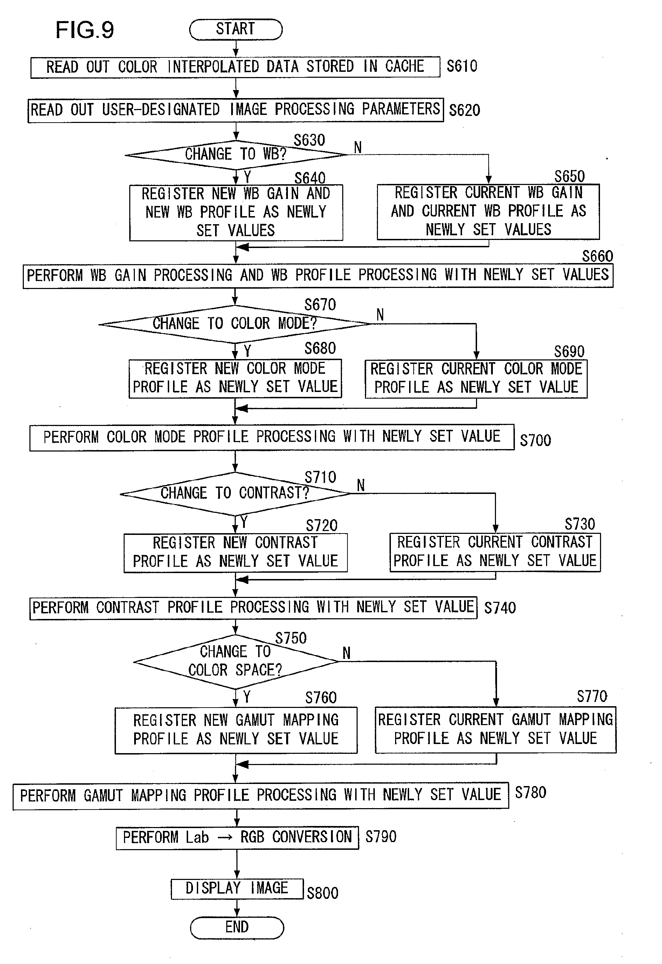

FIG. 9 is a flowchart showing the flow of image editing processing in the present embodiment. The processing shown in FIG. 9 is executed by the image processing execution unit 203a as a program that starts when, after the image data for display has been displayed upon the monitor 205, a change of image processing parameters is made by the user upon the image processing parameter setting screen. The program of the flowchart shown in FIG. 9 is recorded upon the HDD 204. Moreover, the program of the flowchart shown in FIG. 9 is installed upon the HDD 204 from a storage medium such as a CD-ROM or a DVD-ROM or the like.

In a step S610, the image processing execution unit 203a reads out the color interpolated data that was recorded in the SDRAM in the step S430 of FIG. 7, and then the flow of control proceeds to a step S620. In the step S620, the image processing execution unit 203a reads out the image processing parameters after they have been changed by the user upon the image editing parameter setting screen, and then the flow of control proceeds to a step S630.

In the step S630, on the basis of the image processing parameters that were read in in the step S620, the image processing execution unit 203a decides whether or not the white balance settings have been changed by the user. If the result of this decision is affirmative, then the flow of control proceeds to a step S640, in which the image processing execution unit 203a identifies a new WB gain and a new WB profile on the basis of the white balance settings after change. The image processing execution unit 203a registers the new WB gain and the new WB profile that have thus been identified as the newly set values. Then the flow of control is transferred to a step S660.

On the other hand, if the result of the decision in the step S630 is negative, then the flow of control is transferred to a step S650. In the step S650, the image processing execution unit 203a registers the WB gain and the WB profile that are currently set (i.e. the current WB gain and the current WB profile) as the newly set values. Then the flow of control proceeds to the step S660.

In the step S660, on the basis of the newly set values that have been set in the step S640 or the step S650, the image processing execution unit 203a performs WB gain calculation processing 2a and WB profile conversion processing 2b upon the RAW image data (the RGB data). Then the flow of control proceeds to a step S670.

In the step S670, on the basis of the image processing parameters that have been read in in the step S620, the image processing execution unit 203a decides whether or not the color mode setting has been changed by the user. If the result of this decision is affirmative, then the flow of control proceeds to a step S680, in which the image processing execution unit 203a identifies a new color mode profile on the basis of the color mode setting after change. The image processing execution unit 203a registers the new color mode profile that has thus been identified as the newly set value. Then the flow of control is transferred to a step S700.

On the other hand, if the result of the decision in the step S670 is negative, then the flow of control is transferred to a step S690. In the step S690, the image processing execution unit 203a registers the color mode profile that is currently set (i.e. the current color mode profile) as the newly set value. Then the flow of control proceeds to the step S700.

In the step S700, on the basis of the newly set values that have been set in the step S680 or the step S690, the image processing execution unit 203a performs color mode profile conversion processing 2c upon the image data that was processed in the step S660. Then the flow of control proceeds to a step S710.

In the step S710, on the basis of the image processing parameters that have been read in in the step S620, the image processing execution unit 203a decides whether or not the contrast setting has been changed by the user. If the result of this decision is affirmative, then the flow of control proceeds to a step S720, in which the image processing execution unit 203a identifies a new contrast profile on the basis of the contrast setting after change. The image processing execution unit 203a registers the new contrast profile that has thus been identified as the newly set value. Then the flow of control is transferred to a step S740.

On the other hand, if the result of the decision in the step S710 is negative, then the flow of control is transferred to a step S730. In the step S730, the image processing execution unit 203a registers the contrast profile that is currently set (i.e. the current contrast profile) as the newly set value. Then the flow of control proceeds to the step S740.

In the step S740, on the basis of the newly set values that have been set in the step S720 or the step S730, the image processing execution unit 203a performs contrast profile conversion processing 2d upon the image data (the Lab data) that was processed in the step S700. Then the flow of control proceeds to a step S750.

In the step S750, on the basis of the image processing parameters that have been read in in the step S620, the image processing execution unit 203a decides whether or not the color space setting has been changed by the user. If the result of this decision is affirmative, then the flow of control proceeds to a step S760, in which the image processing execution unit 203a identifies a new gamut mapping profile on the basis of the color space setting after change. The image processing execution unit 203a registers the new gamut mapping profile that has thus been specified as the newly set value. Then the flow of control is transferred to a step S780.

On the other hand, if the result of the decision in the step S750 is negative, then the flow of control is transferred to a step S770. In the step S770, the image processing execution unit 203a registers the gamut mapping profile that is currently set (i.e. the current gamut mapping profile) as the newly set value. Then the flow of control proceeds to the step S780.

In the step S780, on the basis of the newly set values that have been set in the step S760 or the step S770, the image processing execution unit 203a performs gamut mapping profile conversion processing 2e upon the image data (the Lab data) that was processed in the step S740. Then the flow of control proceeds to a step S790.

In the step S790, the image processing execution unit 203a performs color space conversion upon the image data in the Lab color system to image data in the RGB color system and creates image data for display that reflects the results of the changes of the image processing parameters by the user, and then the flow of control proceeds to a step S800. In the step S800, the display control unit 203b outputs the image data for display that have been created by the image processing execution unit 203a to the monitor 205 and thereby performs display, and then this processing terminates.

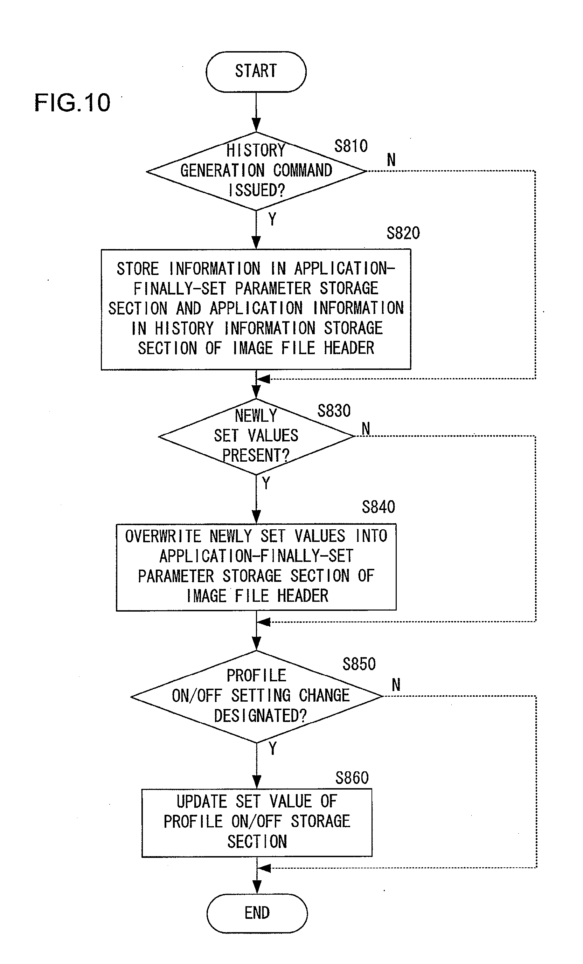

In the present embodiment, the user is able to record the image processing parameters that have been changed upon the image processing parameter setting screen of the development application, in the application-finally-set parameter storage section 3c of the file header. When a command for recording the image processing parameters has been issued by the user, the image processing execution unit 203a performs the image processing parameter recording processing shown in FIG. 10. A command for recording of the image processing parameters may be, for example, a command by the user to perform overwriting storage processing of the RAW data file. Moreover, when the display of the image that is being displayed by the development application is ended, a dialog is displayed in order to confirm whether the change of the image processing parameters by the development application is to be stored. A command for storage issued by the user from this dialog is also a recording command for the image processing parameters.

Furthermore, if the user actuates the actuation members 201 and depresses the OK button 8j on the history display screen of FIG. 8G, this also constitutes a recording command for the image processing parameters. Moreover, if the user actuates the actuation members 201 and issues an OK command on a screen for changing the set value of the profile ON/OFF storage section 3a, this also constitutes a recording command for the image processing parameters. The program of the flowchart shown in FIG. 10 is recorded upon the HDD 204. Moreover, the program of the flowchart shown in FIG. 10 is installed upon the HDD 204 from a storage medium such as a CD-ROM or a DVD-ROM.

In a step S810, the image processing execution unit 203a decides whether or not a history generation command has been issued by the user for storing the information that, at the present time, is recorded in the application-finally-set parameter storage section 3c of the file header, in the application history information storage section 3d. In other words a decision is made as to whether or not, before issuing the recording command for the image processing parameters, the user has clicked the "Add" button 8i upon the history screen of FIG. 8G. If the result of this decision is negative, the flow of control is transferred to a step S830. On the other hand, if the result of this decision is affirmative, the flow of control proceeds to a step S820.

Alternatively, the image processing unit 203a may also make the decision of the step S810 according to the following condition. That is, if a setting for "store application-finally-set parameters before change as history information" has been performed in advance upon a selection menu displayed upon the monitor 205 but not shown in the figures by the user actuating the actuation members 201, then the image processing unit 203a reaches an affirmative decision in the step S810. On the other hand, if this setting is not made, then the image processing unit 203a reaches a negative decision in the step S810.

In the step S820, the image processing execution unit 203a records the image processing parameters that are recorded in the application-finally-set parameter storage section 3c of the file header in the application history information storage section 3d. Moreover, the image processing execution unit 203a records the name of this application, and a name for the history that has been input via the history display screen, in the application information (application name) of the history information storage section 3d. Then the flow of control proceeds to a step S830.

In the step S830, the image processing execution unit 203a makes a decision as to whether or not the image processing parameters are changed by the user upon the above described image processing parameter setting screen, so that newly set values are set for the image processing parameters. If the result of this decision is negative, then the flow of control is transferred to a step S850. On the other hand, if the result of this decision is affirmative, then the flow of control proceeds to a step S840. In the step S840, the image processing execution unit 203a stores the newly set values in the application-finally-set parameter storage section 3c of the file header (overwriting storage). Then the flow of control proceeds to a step S850.

In the step S850, the image processing execution unit 203a decides whether or not the profile ON/OFF set value has been changed by the user upon the above described image processing parameter setting screen. If the result of this decision is negative, then this processing terminates. On the other hand, if the result of this decision is affirmative, then the flow of control proceeds to a step S860. In the step S860, the image processing execution unit 203a updates the set value of the profile ON/OFF storage section 3a of the file header with the values after change, and then processing terminates.

According to the present embodiment as explained above, the following types of beneficial operational effect may be obtained.
(1) The image file creation unit 104b records in the file header a set of profiles (i.e. a characteristic parameter set) that are used for creating color image data for display of individually different colors from the RAW image data, and records in the file header a camera-specified profile/gain (i.e. characteristic specification information) for designating which one of the individual profiles that are included in the set of a plurality of profiles is to be used for creating the image data for display. The image file creation unit 104b creates an image file in which the RAW image data, the set of a plurality of profiles, and the camera-specified profile/gain are held in mutual correspondence, and records this image file in the memory card. At this time, it is arranged for the individual profiles in the set of a plurality of profiles to be stored in the camera WB gain storage section 3b-2, the camera WB profile storage section 3b-3, the camera color mode profile storage section 3b-4, the camera contrast profile storage section 3b-5, and the camera gamut mapping profile storage section 3b-6. As a result, for each of the elements of image processing, it becomes possible to set the parameters that can be set by the camera 100 upon the personal computer 200 that has read in the image file. Accordingly, it is possible to implement the same image processing as the image processing that can be performed upon the RAW image data by the camera 100, upon the personal computer 200.
(2) The image processing execution unit 203a reads out from the memory card the image file in which are recorded the RAW image data, the set of profiles, and the camera-specified profile/gain, decides, on the basis of the camera-specified profile/gain, which profile is designated from among the various profiles included in the set of profiles, and creates image data for display by performing image processing upon the RAW image data using the profile that has been decided upon. The display control unit 203b displays the image data for display that has been created by the image processing execution unit 203a upon the monitor. At this time, it is arranged for the individual profiles in the set of profiles to be stored in the camera WB gain storage section 3b-2, the camera WB profile storage section 3b-3, the camera color mode profile storage section 3b-4, the camera contrast profile storage section 3b-5, and the camera gamut mapping profile storage section 3b-6. As a result, it is possible to create and to display image data for display using a profile possessed by the camera 100, upon the personal computer 200, and moreover it is possible to change the parameters that are to be used for each of the elements of image processing that canbe perfumed by the camera 100 upon the RAW image data.
(3) It is arranged for the image processing execution unit 203a to receive changes of the image processing parameters from the user upon the image processing parameter setting screen, and to create image data for display by performing image processing upon the RAW image data using the image processing parameters (i.e. the profiles) after they have been changed. Due to this, the user is able to perform editing of the image in the development application.
(4) It is arranged for the image processing execution unit 203a to receive changes of the image processing parameters from the user upon the image processing parameter setting screen, and to record the image processing parameters (i.e. the profiles) after they have been changed in the file header. As a result, it is possible to record the result of editing in the development application in the file header.
(5) It is arranged for the image file creation unit 104b to create a small thumbnail image and a viewing thumbnail image by performing image processing upon the RAW image data using the profile that is designated by the camera-specified profile/gain storage section 3b-1, and to record these thumbnail images that it has created as included in the image file. As a result, the user is able to check the image upon which processing has been completed upon the monitor 106.
(6) When a profile possessed by a development application has been selected by the user upon the image processing parameter setting screen, it is arranged for the image processing execution unit 203a to perform processing upon the RAW image data and to create the image data for display using this profile possessed by the development application. As a result, the user is also able to perform methods of picture processing that use profiles unique to the application.
(7) WB gains and profiles are recorded in both the camera-set parameter storage section 3b and the application-finally-set parameter storage section 3c of the file header, and it is arranged for the image processing execution unit 203a to determine whether to perform image processing using the information that is recorded in the camera-set parameter storage section 3b, or in the application-finally-set parameter storage section 3c, on the basis of the set value of the profile ON/OFF storage section 3a. As a result, it is possible to instruct the development application whether the parameters that have been set by the camera, or the parameters that have been set by the development application, are to be used in the creation of the image data for display.
(8) The camera-set parameter storage section 3b and the application-finally-set parameter storage section 3c are provided in the file header, and it is arranged to record the WB gain and profiles that are recorded by the development application, and the WB gain and profiles that are recorded by the camera, separately. As a result, it is possible to store the image processing parameters that have been finally confirmed in the development application, while leaving the setting of the profiles that can be set by the camera 100 just as it is without disturbance.
(9) If the contents of the application-finally-set parameter storage section 3c have changed, it is arranged for the image processing execution unit 203a to update the information in the application-finally-set parameter storage section 3c that have changed. As a result, if the user has changed the image processing parameters in the development application, it is possible to store these contents after they have changed.
(10) It is arranged for the image processing execution unit 203a to record the information that is recorded in the application-finally-set parameter storage section 3c up to this time, in the application history information storage section 3d when the information in the application-finally-set parameter storage section 3c is updated. As a result, the information that was stored in the application-finally-set parameter storage section in the past is not lost, and can be reused.
(11) It is arranged for the image processing execution unit 203a to update the set value in the profile ON/OFF storage section 3a on the basis of a command by the user upon the image processing parameter setting screen. As a result, the user is able to designate that image processing to be performed using the image processing parameters in either the camera-set parameter storage section 3b or the application-finally-set parameter storage section 3c.

### MODIFICATIONS

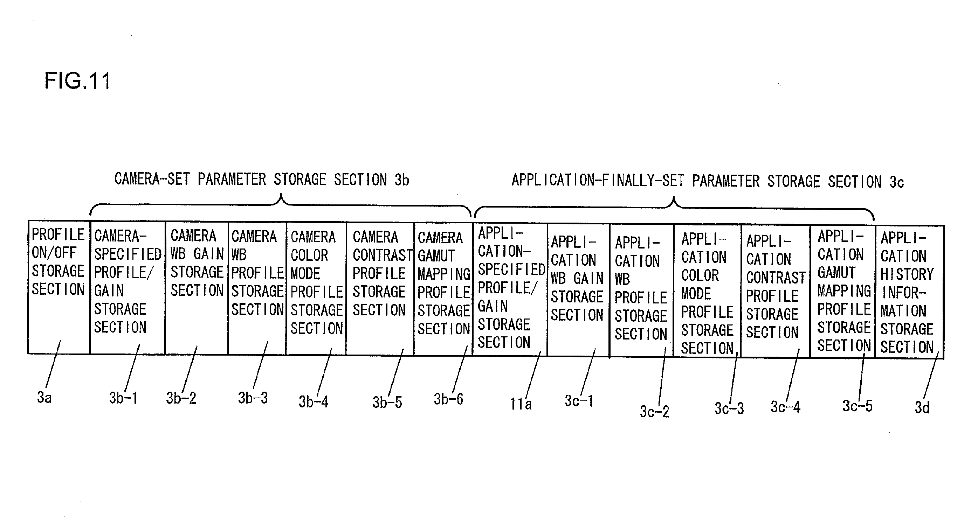

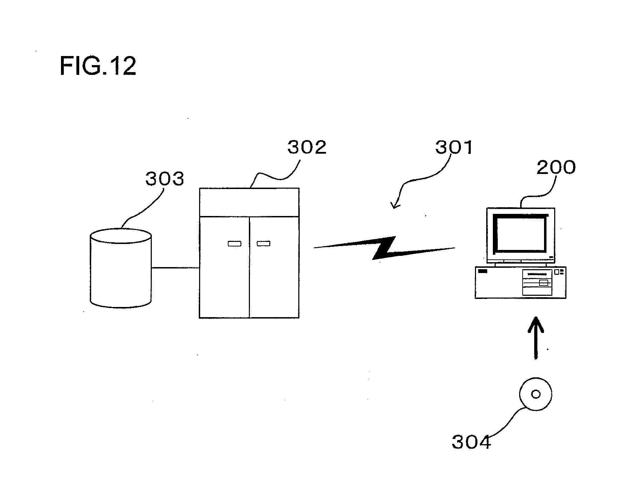

Note that the image processing system in the embodiment described above may also be varied as described below.
(1) In the embodiment described above, an example was described in which the file header of the RAW data file had the format shown in FIG. 3. However, it would also be acceptable for the file header to be in some other format. For example, it would also be acceptable to arrange for the file header to be in a second format as shown in FIG. 11. Note that, in FIG. 11, new reference symbols are attached only to data whose format is different from the format shown in FIG. 3, and the explanation will focus upon the points of difference. In the second format shown in FIG. 11, an application-specified profile/gain storage section 11a is included in the application-finally-set parameter storage section 3c.
   The profiles that can be set by the development application are stored in the application WB gain storage section 3c-1 through the application gamut mapping profile storage section 3c-5 in a similar manner to the camera WB gain storage section 3b-2 through the camera gamut mapping profile storage section 3b-6 in FIG. 3. In the application-specified profile/gain storage section 11a is stored information for identifying which WB gain and profile from among the plurality of WB gains and the plurality of profiles that are stored in each of the application WB gain storage section 3c-1 through the application gamut mapping profile storage section 3c-5 are set to be used for performing development processing, in a similar manner to the camera-specified profile/gain storage section 3b-1 that is included in the camera-set parameter storage section 3b.
   When performing the processing of FIG. 7 upon the RAW data file in the second format, the control device 203 of the personal computer 200 performs the following processing. That is, in the step S550, the image processing execution unit 203a identifies the application-specified WB gain and the application-specified profiles that have been finally confirmed by the development application on the basis of the set values in the application-specified profile/gain storage section 11a, and registers them as the currently set values. The image processing execution unit 203a creates the image data for display using the various parameters that are registered as the currently set values, by performing the processing from the step S560 through the step S600, and the processing of the step S530.
   Note that the image file creation unit 104b may be arranged to update the set of characteristic parameters that are individually recorded in the application WB gain storage section 3c-1 through the application gamut mapping profile storage section 3c-5 with the set of characteristic parameters that have been newly set, and to update the information that is recorded in the application-specified profile/gain storage section 11a with information that is based upon the set of a plurality of characteristic parameters that have been newly set. At this time, the image file creation unit 104b may also be arranged as follows. That is, when updating the set of characteristic parameters that are recorded in the application WB gain storage section 3c-1 through the application gamut mapping profile storage section 3c-5 and the information that is recorded in the application-specifiedprofile/gain storage section 11a, the image file creation unit 104b records the characteristic parameters that are specified from among the set of characteristic parameters on the basis of the information that is recorded in the application-specified profile/gain storage section 11a, as second history information of the image file in the application history information storage section 3d.
(2) In the embodiment described above, it is arranged to perform (A) the WB profile conversion processing (of the steps S490, S570, and S660) by processing with a RGB → RGB conversion table, (B) the color mode profile conversion processing (of the steps S500, S580, and S700) by processing with an RGB→ Lab conversion table, and (C) the contrast profile conversion processing (of the steps S510, S590, and S740) and the gamut mapping profile conversion processing (of the steps S520, S600, and S780) by processing with a Lab → Lab conversion table. However, it would also be acceptable to arrange to perform (a) the WB profile conversion processing by processing with an RGB → Lab conversion table, and (b) the color mode profile conversion processing through the gamut mapping profile conversion processing by processing with an Lab → Lab conversion table. In any of these cases, it would be desirable for all of the cameras and all of the development applications to follow only one or the other of these rules.
(3) At minimum two types ofprofile conversion processing is acceptable for development. For example, the contrast profile conversion processing and the gamut mapping profile conversion processing may be omitted or these may be combined with the color mode profile conversion processing to constitute one single profile conversion process.
(4) While the profile ON/OFF setting in the step S270 of FIG. 6, it is arranged to always set "1", it would also be acceptable for it to be arranged to determine "0", "1", or "2" on the basis of setting by the user.
(5) While, in the steps S810 and S820 of FIG. 10, it was arranged to store the history information only if a history generation command was issued, it would also be acceptable to store this information, irrespective of whether it is ordered or not.
(6) In the embodiment described above, an example has been explained in which the image file creation unit 104b stores a plurality of parameters in each of the camera WB gain storage section 3b-2, the camera WB profile storage section 3b-3, the camera color mode profile storage section 3b-4, the camera contrast profile storage section 3b-5, and the camera gamut mapping storage section 3b-6 of the camera-set parameter storage section 3b of FIGS. 3 and 11. However, it would also be acceptable to arrange for the image file creation unit 104b to store only single parameters that have finally been designated by the camera in the camera WB gain storage section 3b-2, the camera WB profile storage section 3b-3, the camera color mode profile storage section 3b-4, the camera contrast profile storage section 3b-5, and the camera gamut mapping storage section 3b-6, respectively. In other words, in the embodiments described above, the image file creation unit 104b can store just the parameters that have been designated by the camera-specified profile/gain storage section 3b-1 in the various storage sections described above. Thus, in this case, the camera-specified profile/gain storage section 3b-1 would become unnecessary.
(7) In the embodiment described above, the programs of the flowcharts shown in FIGS. 7, 9, and 10 are shown, by way of example, as being installed upon the HDD 204 from a storage medium such as a CD-ROM or a DVD-ROM or the like. However, these programs may be supplied via a data signal from the internet or the like. FIG. 12 is a diagram illustrating ways in which these programs may be supplied from a storage medium such as a CD-ROM or a DVD-ROM or the like, or from the internet or the like via a data signal. The personal computer 200 receives supply of the program via a recording medium 304. Moreover, the personal computer 200 is endowed with a function of connection to a communication circuit 301. A computer 302 is a server computer that supplies the program described above, and stores the program upon a recording medium such as a hard disk 303 or the like. The communication circuit 301 is a communication circuit such as the internet or the like, or a dedicated communication circuit or the like. The computer 302 reads out the program using the hard disk 303, and transmits the program via the communication circuit 301 to the personal computer 200. In other words, the program is embodied as a data signal upon a carrier wave, and is transmitted via the communication circuit 401. In this manner, the program may be supplied as a computer-readable computer program product in various different formats, such as a recording medium or a data signal (a carrier wave) or the like.

## Claims

1. An image data recording device, comprising:
a parameter set storage section in which are recorded a plurality of characteristic parameter sets, each including a plurality of characteristic parameters used for creating, from RAW image data, image data for display of a different characteristic color;
a characteristic specification information creation unit that creates characteristic specification information for designating which characteristic parameter in the plurality of characteristic parameter sets is to be used for creating the image data for display; and
a recording unit that records the RAW image data, the plurality of characteristic parameter sets, and the characteristic specification information related to each other upon a storage medium; wherein
the plurality of characteristic parameter sets includes a first stage characteristic parameter set including characteristic parameters to be used for performing a first stage of image processing that is to be performed upon the RAW image data, and a second stage characteristic parameter set including characteristic parameters to be used for performing a second stage of image processing that is to be performed after the image processing of the first stage.

2. An image processing device, comprising:
a read out unit that reads out data from a storage medium having stored the data therein, the stored data including
RAW image data,
a plurality of characteristic parameter sets including a first stage characteristic parameter set containing characteristic parameters to be used for performing a first stage of data conversion processing to be performed upon the RAW image data, and a second stage characteristic parameter set containing characteristic parameters to be used for performing a second stage of data conversion processing to be performed after the fist stage of data conversion processing, in order to create image data for display of colors having different characteristics on the basis of the RAW image data, and
characteristic specification information for designating which of the characteristic parameters contained in each of the plurality of characteristic parameter sets is to be used for creating the image data for display;
a characteristic designation information determination unit that determines, on the basis of the characteristic specification information read out by the read out unit, which of the characteristic parameters contained in each of the plurality of sets of characteristic parameters has been designated;
an image processing unit that performs image processing on the RAW image data using the characteristic parameter determined by the characteristic specification information determination unit to create the image data for display; and
a display unit that displays an image corresponding to the image data for display created by the image processing unit, wherein
the image processing unit performs the second stage of image processing after performing the first stage of image processing upon the RAW image data to create the image data for display.

3. An image processing device according to Claim 2, further comprising:
a characteristic parameter designation unit that, on the basis of an instruction from the user, designates either of the characteristic parameters included in the plurality of sets of characteristic parameters; wherein
when the characteristic parameter designation unit has designated a characteristic parameter, the image processing unit creates the image data for display by performing image processing upon the RAW image data using the characteristic parameter designated by the characteristic parameter designation unit.

4. An image processing device according to Claim 3, further comprising:
a characteristic specification information updating unit that takes the characteristic parameter designated by the characteristic parameter designation unit as the characteristic specification information, and updates the characteristic specification information recorded upon the storage medium.

5. An image processing device according to Claim 3, further comprising:
a recording unit that records the characteristic parameter designated by the characteristic parameter designation unit upon the storage medium.

6. A camera, comprising:
an image-capturing unit that captures and acquires an image of a photographic subject;
a parameter set storage section in which is recorded a plurality of characteristic parameter sets each including a plurality of characteristic parameters to be used for creating, from RAW image data acquired by the image-capturing unit, image data for display of different colors corresponding to the characteristics of the image-capturing unit;
a characteristic specification information creation unit that creates characteristic specification information for designating which characteristic parameter in the plurality of characteristic parameter sets is to be used for creating the image data for display; and
a recording unit that records the RAW image data, the plurality of characteristic parameter sets, and the characteristic specification information upon a storage medium in relation to each other, wherein
the plurality of characteristic parameter sets includes a first stage characteristic parameter sets, which contains characteristic parameters to be used for performing a first stage of image processing that is to be performed upon the RAW image data, and a second stage set characteristic parameter set, which contains characteristic parameters to be used for performing a second stage of image processing that is to be performed after the image processing of the first stage.

7. A camera according to Claim 6, further comprising:
an image processing unit that creates processed image data by performing image processing upon the RAW image data using the characteristic parameter designated by the characteristic specification information, wherein
the recording unit records the processed image data together with the RAW image data upon the storage medium.
